# EUROPEAN PATENT APPLICATION

(11) **EP 4 835 274 A1**
(43) Date of publication of application: **04.11.2026**
(21) Application number: 26176112.6
(22) Date of filing: 01.05.2026
(51) Int. Cl.: F02C 3/055

(54) **AIRCRAFT POWERPLANT WITH WANKEL COMPRESSOR(S)**

(30) Priority: 02.05.2025 US 202519197642
(71) Applicant: Pratt & Whitney Canada Corp., Longueuil, Québec J4G 1A1 (CA)
(72) Inventor: LABRECQUE, Michel, (01BE5) Longueuil, J4G 1A1 (CA)
(74) Representative: Dehns

(57) **Abstract**

A powerplant (20) for an aircraft includes a compressor section (36), a combustor section (37), a turbine section (38) and a flowpath (34). The compressor section (36) includes a Wankel compressor rotor (44). The combustor section (37) includes a combustor (112) independent of the Wankel compressor rotor (44). The turbine section (38) includes a turbine rotor (84) operatively coupled to the Wankel compressor rotor (44). The flowpath (34) extends through the compressor section (36), the combustor section (37) and the turbine section (38) from an airflow inlet (40) into the flowpath (34) to a combustion products exhaust (42) from the flowpath (34).

## Description

### TECHNICAL FIELD

This invention relates generally to an aircraft powerplant and, more particularly, to a compressor section for the aircraft powerplant.

### BACKGROUND INFORMATION

An aircraft powerplant with a gas turbine engine includes a compressor section. Various types of compressor sections are known in the art. While these known compressor sections have various benefits, there is still room in the art for improvement.

### SUMMARY

According to an aspect of the present invention, a powerplant is provided for an aircraft. This aircraft powerplant includes a compressor section, a combustor section, a turbine section and a flowpath. The compressor section includes a Wankel compressor rotor. The combustor section includes a combustor independent of the Wankel compressor rotor. The turbine section includes a turbine rotor operatively coupled to the Wankel compressor rotor. The flowpath extends through the compressor section, the combustor section and the turbine section from an airflow inlet into the flowpath to a combustion products exhaust from the flowpath.

According to another aspect of the present invention, another powerplant is provided for an aircraft. This aircraft powerplant includes a compressor section, a combustor section, a turbine section and a flowpath. The compressor section includes a compressor housing and a multi-lobed compressor rotor. The compressor housing includes a multi-lobed cavity. The multi-lobed compressor rotor is disposed in the multi-lobed cavity. The multi-lobed compressor rotor is configured to rotate eccentrically about a first axis. The combustor section includes an annular combustor. The turbine section includes a turbine rotor operatively coupled to and configured to drive rotation of the multi-lobed compressor rotor. The turbine rotor is configured to rotate about a second axis offset from the first axis. The flowpath extends through the compressor section, the combustor section and the turbine section from an airflow inlet into the flowpath to a combustion products exhaust from the flowpath.

According to still another aspect of the present invention, another powerplant is provided for an aircraft. This aircraft powerplant includes a compressor section, a combustor section, a turbine section and a flowpath. The compressor section includes a compressor housing and a multi-lobed compressor rotor. The compressor housing includes a multi-lobed cavity. The multi-lobed compressor rotor is disposed in the multi-lobed cavity. The multi-lobed compressor rotor is configured to rotate eccentrically about an axis. The combustor section includes an annular combustor. The turbine section includes a turbine rotor operatively coupled to and configured to drive rotation of the multi-lobed compressor rotor. The turbine rotor is configured to rotate about the axis. The flowpath extends through the compressor section, the combustor section and the turbine section from an airflow inlet into the flowpath to a combustion products exhaust from the flowpath.

Optionally, and in accordance with any of the above, the multi-lobed cavity may be a first multi-lobed cavity. The compressor housing may also include a second multi-lobed cavity. The multi-lobed compressor rotor may be a first multi-lobed compressor rotor. The compressor section may also include a second multi-lobed compressor rotor disposed in the second multi-lobed cavity. The second multi-lobed compressor rotor may be configured to rotate eccentrically about the axis.

Optionally, and in accordance with any of the above, the multi-lobed cavity may be a first multi-lobed cavity. The compressor housing may also include a second multi-lobed cavity. The multi-lobed compressor rotor may be a first multi-lobed compressor rotor. The compressor section may also include a second multi-lobed compressor rotor disposed in the second multi-lobed cavity. The second multi-lobed compressor rotor may be configured to rotate eccentrically about the first axis.

Optionally, and in accordance with any of the above, the Wankel compressor rotor may be configured to eccentrically rotate about an axis. The Wankel compressor rotor may have a multi-lobed cross-sectional geometry in a reference plane perpendicular to the axis.

Optionally, and in accordance with any of the above, the compressor section may also include a compressor housing. The compressor housing may include a multi-lobed cavity. The Wankel compressor rotor may be disposed in the multi-lobed cavity.

Optionally, and in accordance with any of the above, the compressor housing may also include a first inlet port, a second inlet port, a first outlet port and a second outlet port. The first inlet port may be fluidly coupled to a first lobe region of the multi-lobed cavity. The second inlet port may be fluidly coupled to a second lobe region of the multi-lobed cavity. The first outlet port may be fluidly coupled to the first lobe region of the multi-lobed cavity. The second outlet port may be fluidly coupled to the second lobe region of the multi-lobed cavity.

Optionally, and in accordance with any of the above, a first compression volume in the first lobe region and a second compression volume in the second lobe region may be fluidly coupled in parallel between the airflow inlet into the flowpath and the combustor section.

Optionally, and in accordance with any of the above, the Wankel compressor rotor may be a first Wankel compressor rotor. The compressor section may also include a first Wankel compressor and a second Wankel compressor. The first Wankel compressor may include the first Wankel compressor rotor. The second Wankel compressor may include a second Wankel compressor rotor. The first Wankel compressor and the second Wankel compressor may be fluidly coupled in parallel between the airflow inlet into the flowpath and the combustor section.

Optionally, and in accordance with any of the above, the Wankel compressor rotor may be a first Wankel compressor rotor. The compressor section may include a first Wankel compressor and a second Wankel compressor. The first Wankel compressor may include the first Wankel compressor rotor. The second Wankel compressor may include a second Wankel compressor rotor. The first Wankel compressor and the second Wankel compressor may be fluidly coupled in series between the airflow inlet into the flowpath and the combustor section.

Optionally, and in accordance with any of the above, the Wankel compressor rotor may be configured to eccentrically rotate about a first axis. The turbine rotor may be configured to rotate about a second axis offset from the first axis.

Optionally, and in accordance with any of the above, the Wankel compressor rotor may be configured to eccentrically rotate about an axis. The turbine rotor may be configured to rotate about the axis.

Optionally, and in accordance with any of the above, the compressor section may also include a second compressor rotor arranged between the airflow inlet into the flowpath and the Wankel compressor rotor along the flowpath.

Optionally, and in accordance with any of the above, the second compressor rotor may be operatively coupled to the turbine rotor.

Optionally, and in accordance with any of the above, the second compressor rotor may be configured as or otherwise include an axial flow compressor rotor.

Optionally, and in accordance with any of the above, the second compressor rotor may be configured as or otherwise include a radial flow compressor rotor.

Optionally, and in accordance with any of the above, the turbine rotor may be configured as or otherwise include an axial flow turbine rotor.

Optionally, and in accordance with any of the above, the aircraft powerplant may also include a heat exchanger arranged along the flowpath between the airflow inlet into the flowpath and the Wankel compressor rotor.

Optionally, and in accordance with any of the above, the aircraft powerplant may also include a heat exchanger arranged along the flowpath between the Wankel compressor rotor and the combustor section.

Optionally, and in accordance with any of the above, the aircraft powerplant may also include a mechanical load including a driven rotor. The turbine section may also include a second turbine rotor arranged between the turbine rotor and the combustion products exhaust from the flowpath along the flowpath. The second turbine rotor may be operatively coupled to the driven rotor.

Optionally, and in accordance with any of the above, the mechanical load may be configured as or otherwise include a propulsion section. The driven rotor may be configured as or otherwise include a propulsor rotor.

Optionally, and in accordance with any of the above, the mechanical load may be configured as or otherwise include an electric generator. The driven rotor may be configured as or otherwise include a generator rotor.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial sectional schematic illustration of an aircraft powerplant with a gas turbine engine and Wankel compressors outside of the gas turbine engine.
FIGS. 2A-D are sectional illustrations of a Wankel compressor at various stages during a compression cycle.
FIGS. 3A and 3B are schematic illustrations of multiple Wankel compressors in parallel and serial arrangements.
FIG. 4 is a partial sectional schematic illustration of the aircraft powerplant with Wankel compressors integrated with the gas turbine engine.

### DETAILED DESCRIPTION

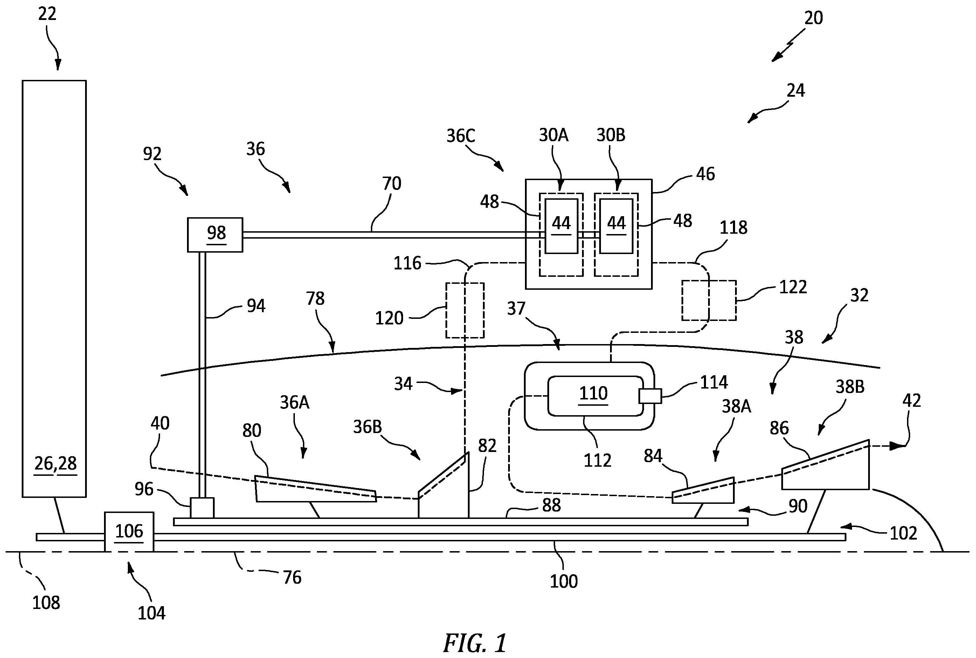

FIG. 1 illustrates a powerplant 20 for an aircraft. The aircraft may be an airplane, a rotorcraft (e.g., a helicopter), a drone (e.g., an unmanned aerial vehicle (UAV)) or any other manned or unmanned aerial vehicle or system. The aircraft powerplant 20 may be configured as, or otherwise included as part of, a propulsion and/or lift system for the aircraft. The aircraft powerplant 20 may also or alternatively be configured as, or otherwise included as part of, an electrical power system for the aircraft. The aircraft powerplant 20 of FIG. 1 includes a mechanical load 22 powered by an engine system 24.

The mechanical load 22 may be configured as or may otherwise include a rotor 26 mechanically driven by the engine system 24. This driven rotor 26 may be a bladed propulsor rotor 28 configured to produce propulsive thrust and/or lift for the aircraft propulsion and/or lift system. The propulsor rotor 28 may be an open propulsor rotor (e.g., an un-ducted propulsor rotor), a ducted propulsor rotor or any other rotating air mover. Examples of the open propulsor rotor include, but are not limited to, a propeller rotor, a rotorcraft rotor (e.g., a helicopter main rotor, a helicopter tail rotor, etc.), a propfan rotor and a pusher fan rotor. An example of the ducted propulsor rotor is a fan rotor. Alternatively, the driven rotor 26 may be configured as a generator rotor of an electric power generator for the aircraft electrical power system; e.g., an auxiliary power unit (APU) system. The present invention, of course, is not limited to the foregoing exemplary driven rotor configurations. Moreover, it is contemplated the mechanical load 22 may include multiple of the rotors driven by the engine system 24. However, for ease of description, the mechanical load 22 is described below with the single driven rotor 26, and the driven rotor 26 is described below as the propulsor rotor 28 for a propulsion section of the aircraft powerplant 20.

The engine system 24 of FIG. 1 includes one or more Wankel compressors 30A and 30B (generally referred to as "30"), a gas turbine engine 32 and an engine flowpath 34; e.g., a core flowpath. The Wankel compressors 30 and the gas turbine engine 32 collectively provide the engine system 24 with a compressor section 36, a combustor section 37 and a turbine section 38. The compressor section 36 of FIG. 1 includes a low pressure compressor (LPC) section 36A, an intermediate pressure compressor (IPC) section 36B and a high pressure compressor (HPC) section 36C. The turbine section 38 of FIG. 1 includes a high pressure turbine (HPT) section 38A and a low pressure turbine (LPT) section 38B. The engine flowpath 34 extends longitudinally in the engine system 24 and its members 30 and 32 from an airflow inlet 40 into the engine flowpath 34 to a combustion products exhaust 42 from the engine flowpath 34. More particularly, the engine flowpath 34 of FIG. 1 extends sequentially longitudinally through the LPC section 36A, the IPC section 36B, the HPC section 36C, the combustor section 37, the HPT section 38A and the LPT section 38B from the flowpath inlet 40 to the flowpath exhaust 42. The flowpath inlet 40 may be an airflow inlet into the engine system 24 from an environment external to the aircraft powerplant 20 and, more generally, the aircraft. The flowpath exhaust 42 may also or alternatively be a combustion products exhaust from the engine system 24 into the external environment.

The Wankel compressors 30 of FIG. 1 each include a respective Wankel compressor rotor 44 and may share a common Wankel compressor housing 46. However, it is contemplated each of the Wankel compressors 30 may alternatively include a discrete Wankel compressor housing 46 dedicated to the Wankel compressor rotor 44 of the respective Wankel compressor 30. The Wankel compressors 30 of FIG. 1 collectively form the HPC section 36C of the engine system 24. The Wankel compressor rotors 44 are thereby configured as high pressure compressor (HPC) rotors for the HPC section 36C, and the Wankel compressor housing 46 is configured as a high pressure compressor (HPC) housing for the HPC section 36C.

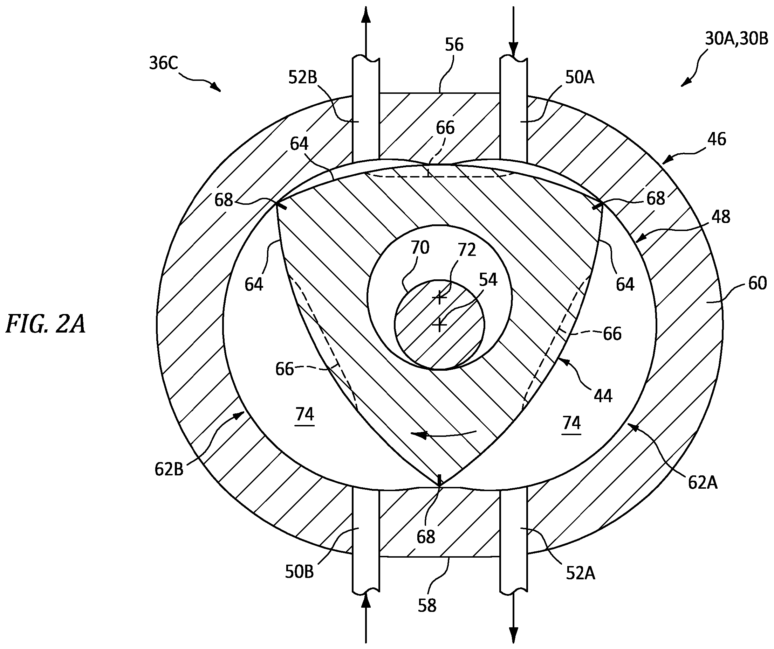

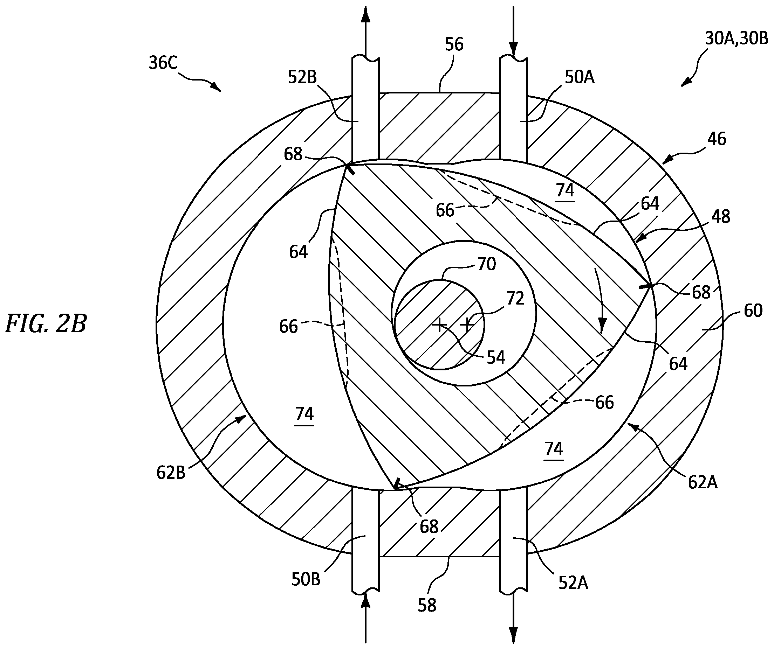

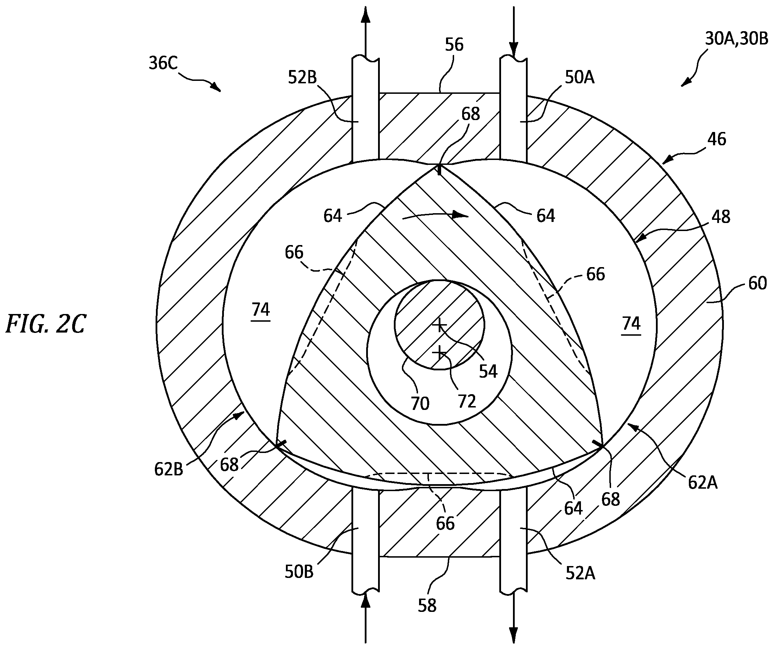

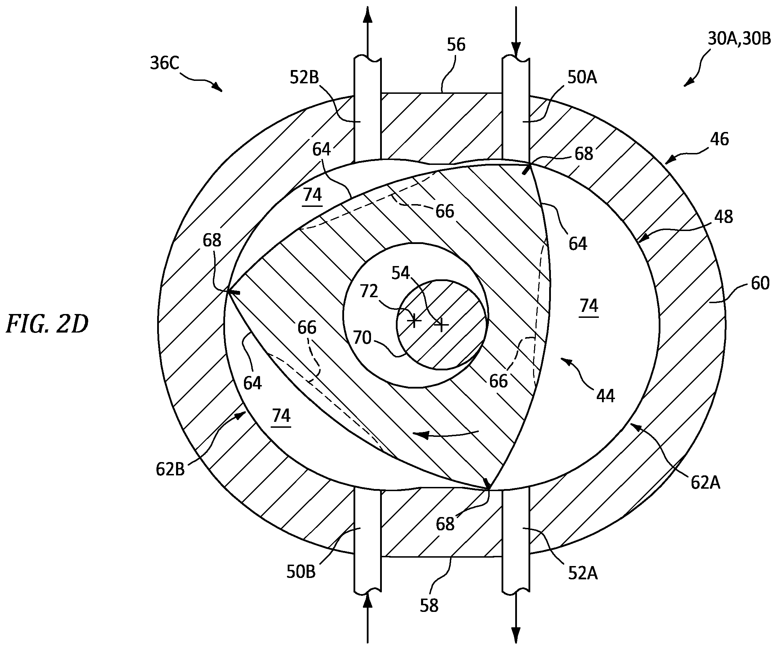

Referring to FIGS. 2A-D, the Wankel compressor housing 46 includes a discrete rotor cavity 48 for each Wankel compressor rotor 44. The Wankel compressor housing 46 also includes one or more airflow inlet ports 50A and 50B (generally referred to as "50") and one or more airflow outlet ports 52A and 52B (generally referred to as "52") for each rotor cavity 48. The rotor cavity 48 of FIGS. 2A-D is configured as a non-circular, multi-lobed cavity (e.g., a bi-lobed cavity) formed within an interior of the Wankel compressor housing 46. More particularly, the rotor cavity 48 has a non-circular, multi-lobed geometry (e.g., a bi-lobed geometry) when viewed in a reference plane perpendicular to a centerline axis 54 of the Wankel compressors 30. With reference to an orientation shown in FIGS. 2A-D, the first inlet port 50A and the second outlet port 52B are arranged at (e.g., on, adjacent or proximate) a first side 56 (e.g., a top side) of the Wankel compressor housing 46. The first outlet port 52A and the second inlet port 50B are arranged at a second side 58 (e.g., a bottom side) of the Wankel compressor housing 46, where the housing second side 58 is arranged opposite (e.g., diametrically opposed to) the housing first side 56. The first inlet port 50A projects radially through a sidewall 60 of the Wankel compressor housing 46 to the rotor cavity 48, where the first inlet port 50A is fluidly coupled to a first lobe region 62A of the rotor cavity 48. The second inlet port 50B projects radially through the housing sidewall 60 to the rotor cavity 48, where the second inlet port 50B is fluidly coupled to a second lobe region 62B of the rotor cavity 48. The first outlet port 52A projects radially through the housing sidewall 60 to the rotor cavity 48, where the first outlet port 52A is fluidly coupled to the first lobe region 62A of the rotor cavity 48. The second outlet port 52B projects radially through the housing sidewall 60 to the rotor cavity 48, where the second outlet port 52B is fluidly coupled to the second lobe region 62B of the rotor cavity 48.

Each Wankel compressor rotor 44 is disposed within the respective rotor cavity 48 and projects into the first lobe region 62A and the second lobe region 62B, where the housing sidewall 60 extends circumferentially around an outer periphery of the respective Wankel compressor rotor 44. The Wankel compressor rotor 44 of FIG. 2A-D is configured as a non-circular, multi-lobed compressor rotor; e.g., a tri-lobed compressor rotor. More particularly, the Wankel compressor rotor 44 has a non-circular, multi-lobed geometry (e.g., a tri-lobed geometry) when viewed in the reference plane. The Wankel compressor rotor 44 of FIG. 2A-D, for example, includes a plurality of (e.g., arcuate, convex) peripheral rotor faces 64 arranged circumferentially about the compressor axis 54. Each of these rotor faces 64 may be arranged with a pocket 66 (e.g., a recess) that projects radially into the respective Wankel compressor rotor 44 from the respective rotor face 64. These pockets 66 may be shaped and sized to tune compression of the respective Wankel compressor 30. Each circumferentially neighboring (e.g., adjacent) pair of the rotor faces 64 meets at a respective apex of the respective Wankel compressor rotor 44. The Wankel compressor rotor 44 of FIG. 2A-D also includes one or more rotor seals 68, where each rotor seal 68 is arranged at a respective one of the rotor apexes. Each rotor seal 68 is configured to sealingly engage (e.g., contact) and thereby form a seal interface with an interior peripheral boundary of the housing sidewall 60. Of course, each Wankel compressor rotor 44 may also be configured with various other seal elements which are omitted from the drawings for clarity. Examples of these other seal elements include, but are not limited to, gas seal element(s) and/or oil seal element(s) arranged with side faces of the respective Wankel compressor rotor 44.

Each Wankel compressor rotor 44 is coupled to and rotatable with a compressor drive shaft 70 through a geared interface. However, each Wankel compressor rotor 44 of FIGS. 2A-D is eccentric to the compressor drive shaft 70 and the compressor axis 54. A centerline axis 72 of the Wankel compressor rotor 44 of FIGS. 2A-D, for example, is parallel with and radially offset outward from the compressor axis 54. Here, the rotor axis 72 is a rotational axis of the Wankel compressor rotor 44 of FIGS. 2A-D, and the compressor axis 54 is a rotational axis of the compressor drive shaft 70. With this arrangement, as the Wankel compressor rotor 44 of FIGS. 2A-D rotates about its rotor axis 72, the rotor axis 72 moves (e.g., circles) around the compressor axis 54.

Each Wankel compressor rotor 44 and a respective section of the Wankel compressor housing 46 collectively form one or more compression volumes 74. More particularly, each Wankel compressor rotor 44 and the respective section of the Wankel compressor housing 46 divide the respective rotor cavity 48 into the compression volumes 74. Each of these compression volumes 74, in particular, is formed by and between a respective one of the rotor faces 64 and a corresponding (albeit changing) portion of the housing sidewall 60, and circumferentially between a respective neighboring pair of the rotor seals 68. Each of the compression volumes 74 moves about the axis 54, 72 as the respective Wankel compressor rotor 44 eccentrically rotates within the Wankel compressor housing 46 and its respective rotor cavity 48. As these compression volumes 74 move about the axis 54, 72, each compression volume 74 may become fluidly coupled with a respective one of the air ports 50, 52.

Referring to FIG. 1, the gas turbine engine 32 includes the LPC section 36A, the IPC section 36B, the combustor section 37, the HPT section 38A and the LPT section 38B. These engine sections 36A, 36B, 37, 38A and 38B may be arranged sequentially along an axis 76 of the gas turbine engine 32 and housed within a stationary engine housing 78; e.g., an engine case.

The LPC section 36A includes a bladed low pressure compressor (LPC) rotor 80. This LPC rotor 80 may be configured as an axial flow compressor rotor; e.g., an axial inflow-axial outflow compressor rotor. The LPC rotor 80 includes one or more compressor blade stages along the engine flowpath 34. Each of these compressor blade stages includes a rotor base and a plurality of compressor blades (e.g., airfoils). These compressor blades are arranged and may be equispaced circumferentially about the rotor base in an array; e.g., an annular compressor blade array. Each of the compressor blades is connected to the rotor base. Each of the compressor blades projects spanwise (e.g., radially) out from the rotor base to a distal tip of the respective compressor blade.

The IPC section 36B includes a bladed intermediate pressure compressor (IPC) rotor 82. This IPC rotor 82 may be configured as a radial flow compressor rotor; e.g., an axial inflow-radial outflow compressor rotor. The IPC rotor 82 includes at least (or only) one compressor blade stage along the engine flowpath 34. This compressor blade stage includes a rotor base and a plurality of compressor blades (e.g., vanes). These compressor blades are arranged and may be equispaced circumferentially about the rotor base in an array; e.g., an annular compressor blade array. Each of the compressor blades is connected to the rotor base. Each of the compressor blades projects spanwise (e.g., radially and/or axially) out from the rotor base to a distal tip of the respective compressor blade.

The HPT section 38A includes a bladed high pressure turbine (HPT) rotor 84. This HPT rotor 84 may be configured as an axial flow turbine rotor; e.g., an axial inflow-axial outflow turbine rotor. The HPT rotor 84 includes one or more turbine blade stages along the engine flowpath 34. Each of these turbine blade stages includes a rotor base and a plurality of turbine blades (e.g., airfoils). These turbine blades are arranged and may be equispaced circumferentially about the rotor base in an array; e.g., an annular turbine blade array. Each of the turbine blades is connected to the rotor base. Each of the turbine blades projects spanwise (e.g., radially) out from the rotor base to a distal tip of the respective turbine blade.

The LPT section 38B includes a bladed low pressure turbine (LPT) rotor 86. This LPT rotor 86 may be configured as an axial flow turbine rotor; e.g., an axial inflow-axial outflow turbine rotor. The LPT rotor 86 includes one or more turbine blade stages along the engine flowpath 34. Each of these turbine blade stages includes a rotor base and a plurality of turbine blades (e.g., airfoils). These turbine blades are arranged and may be equispaced circumferentially about the rotor base in an array; e.g., an annular turbine blade array. Each of the turbine blades is connected to the rotor base. Each of the turbine blades projects spanwise (e.g., radially) out from the rotor base to a distal tip of the respective turbine blade.

The LPC rotor 80 and the IPC rotor 82 are coupled to and rotatable with the HPT rotor 84. The LPC rotor 80 and the IPC rotor 82 of FIG. 1, for example, are connected to the HPT rotor 84 through a high speed shaft 88. At least (or only) the LPC rotor 80, the IPC rotor 82, the HPT rotor 84 and the high speed shaft 88 collectively form a high speed rotating structure 90; e.g., a high speed spool of the gas turbine engine 32. The high speed rotating structure 90 of FIG. 1 and its members 80, 82, 84 and 88 are rotatable about the engine axis 76. This high speed rotating structure 90 is also operatively coupled to each of the Wankel compressor rotors 44 through, for example, an engine-to-Wankel compressor (EWC) drivetrain 92 and the compressor drive shaft 70 (see also FIGS. 2A-D). The EWC drivetrain 92 of FIG. 1 includes a tower shaft 94, an inner gear system 96 (e.g., a ring and pinion) and an outer angled gearbox 98. A radial inner end of the tower shaft 94 is operatively coupled to the high speed rotating structure 90 and its high speed shaft 88 through the inner gear system 96. A radial outer end of the tower shaft 94 is operatively coupled to the compressor drive shaft 70 through the angled gearbox 98. With this arrangement, the HPC section 36C and its Wankel compressors 30 may be arranged radially outboard of the gas turbine engine 32 and its engine housing 78. The compressor axis 54 (see FIGS. 2A-D) is thereby offset radially outboard from the engine axis 76. Here, the compressor axis 54 may (or may not) be parallel to the engine axis 76.

The LPT rotor 86 of FIG. 1 is connected to a low speed shaft 100. At least (or only) the LPT rotor 86 and the low speed shaft 100 collectively form a low speed rotating structure 102; e.g., a power turbine (PT) spool of the gas turbine engine 32. The low speed rotating structure 102 of FIG. 1 and its members 86 and 100 are rotatable about the engine axis 76. This low speed rotating structure 102 is also operatively coupled to the propulsor rotor 28 (the driven rotor 26) through an engine system-to-driven rotor (ESDR) drivetrain 104. The ESDR drivetrain 104 may be configured as a geared drivetrain, where a geartrain 106 (e.g., a transmission, a speed change device, an epicyclic geartrain, etc.) is disposed between and operatively couples the propulsor rotor 28 to the low speed rotating structure 102 and its LPT rotor 86. With this arrangement, the propulsor rotor 28 may rotate at a different (e.g., slower) rotational speed than the low speed rotating structure 102 and its LPT rotor 86. Alternatively, the ESDR drivetrain 104 may be configured as a direct-drive drivetrain, where the geartrain 106 is omitted. With such an arrangement, the propulsor rotor 28 rotates at a common (the same) rotational speed as the low speed rotating structure 102 and its LPT rotor 86. It is worth noting, while the propulsor rotor 28 of FIG. 1 is shown as rotating about a propulsor axis 108 that is coaxial with the engine axis 76, it is contemplated the propulsor axis 108 may alternatively be radially and/or angularly offset from the engine axis 76 in other embodiments.

During operation of the aircraft powerplant 20 of FIG. 1, air (e.g., ambient air from the external environment) is directed into the engine system 24 and its engine flowpath 34 through the flowpath inlet 40. This air entering the engine flowpath 34 is referred to below as "core air". This core air is compressed sequentially by the LPC rotor 80, the IPC rotor 82 and the Wankel compressor rotors 44 and then directed into a combustion chamber 110 (e.g., an annular combustion chamber) within a combustor 112 (e.g., an annular combustor) of the combustor section 37. Fuel is injected into the combustion chamber 110 by one or more fuel injectors 114 and mixed with the compressed core air to provide a fuel-air mixture. This fuel-air mixture is ignited and combustion products thereof flow through and sequentially drive rotation of the HPT rotor 84 and the LPT rotor 86. The rotation of the HPT rotor 84 drives rotation of the LPC rotor 80, the IPC rotor 82 and the Wankel compressor rotors 44 and, thus, powers the compression of the air received from the flowpath inlet 40. The rotation of the LPT rotor 86 drives rotation of the propulsor rotor 28 (the driven rotor 26). The rotation of the propulsor rotor 28 propels air outside of the engine system 24 of FIG. 1 to produce the propulsive thrust and/or lift for the aircraft propulsion and/or lift system. Where the propulsor rotor 28 is an open propulsor rotor, the air propelled by the rotating propulsor rotor 28 flows outside of the aircraft powerplant 20. Where the propulsor rotor 28 is a ducted propulsor rotor, the air propelled by the rotating propulsor rotor 28 flows within a duct (e.g., a bypass duct) of the aircraft powerplant 20. Alternatively, where the driven rotor 26 is configured as the generator rotor, the rotation of the generator rotor may facilitate generation of electricity.

By including the Wankel compressors 30 in the HPC section 36C, additional compression may be provided without including additional stages along the LPC rotor 80 and/or the IPC rotor 82, or including additional axial flow and/or radial flow compressor rotors. Particularly with smaller engine systems, providing high compression ratios may be challenging as relatively small compressor blades for traditional axial flow and/or radial flow compressor rotors may be difficult and/or costly to manufacture. Moreover, as compressor blades decrease in size, traditional sealing apparatuses (e.g., outer shrouds, blade outer air seals (BOASs), etc.) for these compressor blades may become less efficient as a ratio between (a) tip clearance gaps between the compressor blades and the surrounding sealing apparatuses and (b) spanwise heights of the compressor blades increases. Smaller compressor blades may also be more susceptible to damage from erosion. By contrast, the Wankel compressors 30 of the present invention may provide boosted compression for the engine system 24 while maintaining relatively efficient seals.

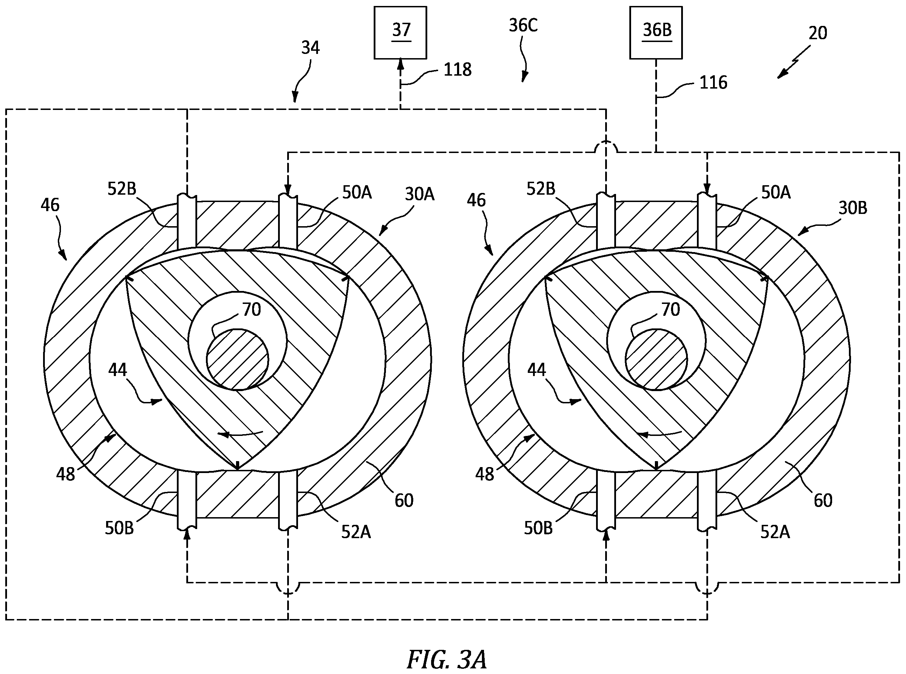

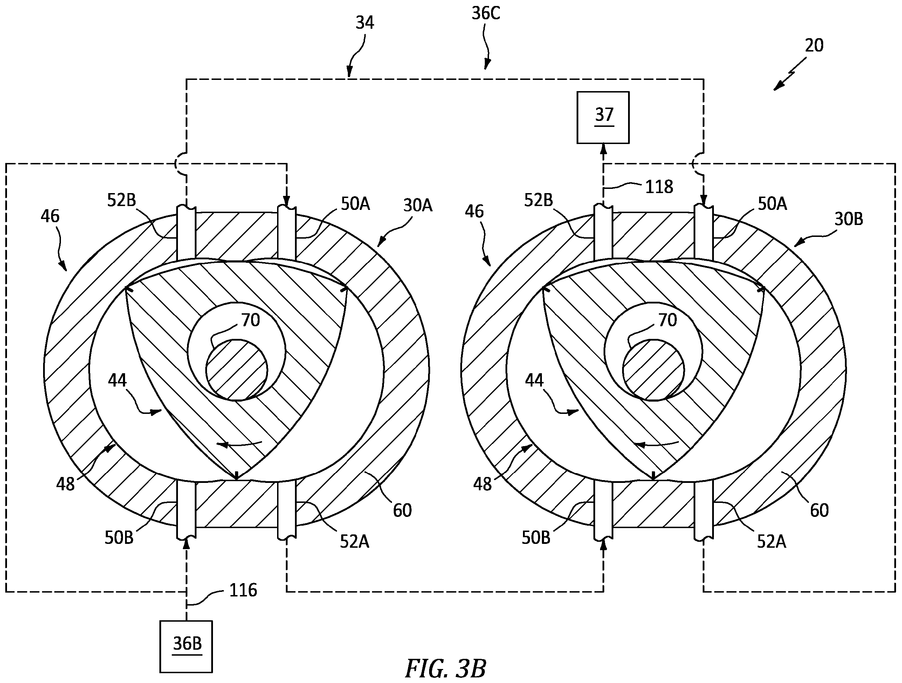

Referring to FIGS. 3A and 3B, the inlet ports 50 of each Wankel compressor 30 may be fluidly coupled to an upstream section 116 of the engine flowpath 34 between the IPC section 36B and the HPC section 36C in parallel. Similarly, the outlet port 52 of each Wankel compressor 30 may be fluidly coupled to a downstream section 118 of the engine flowpath 34 between the HPC section 36C and the combustor section 37 in parallel. Referring to FIG. 3A, the Wankel compressors 30 may also be fluidly coupled to the upstream section 116 of the engine flowpath 34 and the downstream section 118 of the engine flowpath 34 in parallel. Alternatively, referring to FIG. 3B, the Wankel compressors 30 may be arranged in stages. The inlet ports 50 of the first Wankel compressor 30A, for example, may be fluidly coupled to the upstream section 116 of the engine flowpath 34. The outlet ports 52 of the first Wankel compressor 30A may be respectively fluidly coupled to the inlet ports 50 of the second Wankel compressor 30B. The outlet ports 52 of the second Wankel compressor 30B may be fluidly coupled to the downstream section 118 of the engine flowpath 34. Moreover, while the HPC section 36C is described above with two (2) of the Wankel compressors 30, it is contemplated the HPC section 36C may alternatively include a single Wankel compressor or three (3) or more of the Wankel compressors 30.

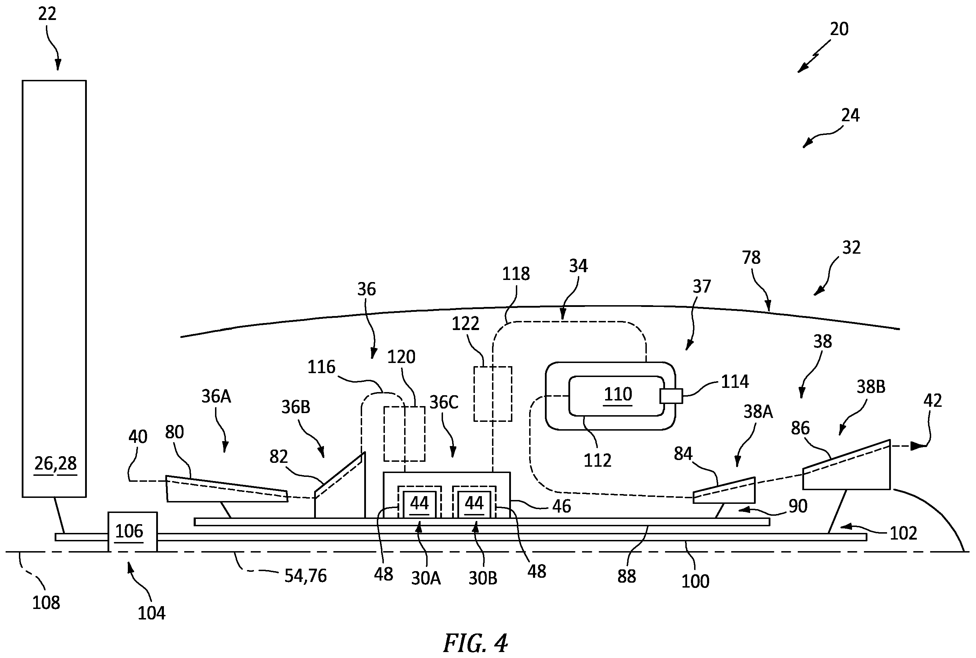

Referring to FIG. 1, the HPC section 36C and its Wankel compressors 30 may be disposed radially outboard of the gas turbine engine 32 and its engine housing 78. In addition, the compressor axis 54 (see FIGS. 2A-D) may be offset radially outboard from the engine axis 76 as described above. The present invention, however, is not limited to such an exemplary arrangement. For example, referring to FIG. 4, the HPC section 36C and its Wankel compressors 30 may alternatively be integrated into the gas turbine engine 32 and radially inboard of the engine housing 78. The Wankel compressors 30 of FIG. 4, for example, are arranged axially along the engine axis 76 between the IPC section 36B and the combustor section 37. Here too, the compressor axis 54 may be arranged coaxial with the engine axis 76.

The HPC section 36C and its Wankel compressors 30 described above are arranged independent of (e.g., remote from, discrete from, etc.) the combustor 112. Hereto, the Wankel compressors 30 are configured to (e.g., only) compress the core air received from the upstream IPC section 36B and provide that compressed core air to the downstream combustor section 37 and its combustor 112. Thus, in contrast to a typical Wankel-type rotary engine, no fuel is injected into nor combusted within the HPC section 36C and its Wankel compressors 30.

In some embodiments, referring to FIGS. 1 and 4, the aircraft powerplant 20 may (or may not) also include one or more heat exchangers 120 and 122. The upstream heat exchanger 120 (e.g., a precooler for the HPC section 36C) is fluidly coupled inline along (or otherwise thermally coupled to) the engine flowpath 34 longitudinally between the IPC section 36B and the HPC section 36C. This upstream heat exchanger 120 may be configured to cool the core air entering the HPC section 36C and its Wankel compressors 30. The downstream heat exchanger 122 (e.g., a recuperator for the HPC section 36C) is fluidly coupled inline along (or otherwise thermally coupled to) the engine flowpath 34 longitudinally between the HPC section 36C and the combustor section 37. This downstream heat exchanger 122 may be configured to cool the core air entering the combustor section 37 while preheating another working fluid for the aircraft powerplant 20; e.g., fuel, lubricant, etc.

While the gas turbine engine 32 of FIGS. 1 and 4 is described above with a particular two rotating structure arrangement (e.g., two-spool architecture), the present invention is not limited thereto. For example, the LPC rotor 80 and/or the IPC rotor 82 may be omitted from the gas turbine engine 32. In another example, the LPC rotor 80 or both the LPC rotor 80 and the IPC rotor 82 may be coupled to and rotatable with the low speed rotating structure 102 rather than the high speed rotating structure 90. In still another example, the gas turbine engine 32 may include another rotating structure; e.g., an intermediate speed spool.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. A powerplant (20) for an aircraft, comprising:
a compressor section (36) comprising a Wankel compressor rotor (44);
a combustor section (37) comprising a combustor (112) independent of the Wankel compressor rotor (44);
a turbine section (38) comprising a turbine rotor (84) operatively coupled to the Wankel compressor rotor (44); and
a flowpath (34) extending through the compressor section (36), the combustor section (37) and the turbine section (38) from an airflow inlet (40) into the flowpath (34) to a combustion products exhaust (42) from the flowpath (34).

2. The powerplant (20) of claim 1, wherein:
the Wankel compressor rotor (44) is configured to eccentrically rotate about an axis (54); and
the Wankel compressor rotor (44) comprises a multi-lobed cross-sectional geometry in a reference plane perpendicular to the axis (54).

3. The powerplant (20) of claim 1 or 2, wherein:
the compressor section (36) further comprises a compressor housing (46);
the compressor housing comprises a multi-lobed cavity (48); and
the Wankel compressor rotor (44) is disposed in the multi-lobed cavity (48).

4. The powerplant (20) of claim 3, wherein the compressor housing (46) further comprises:
a first inlet port (50A) fluidly coupled to a first lobe region (62A) of the multi-lobed cavity (48);
a second inlet port (50B) fluidly coupled to a second lobe region (62B) of the multi-lobed cavity (48);
a first outlet port (52A) fluidly coupled to the first lobe region (62A) of the multi-lobed cavity (48); and
a second outlet port (52B) fluidly coupled to the second lobe region (62B) of the multi-lobed cavity (48).

5. The powerplant (20) of claim 4, wherein a first compression volume (74) in the first lobe region (62A) and a second compression volume (74) in the second lobe region (62B) are fluidly coupled in parallel between the airflow inlet (40) into the flowpath (34) and the combustor section (37).

6. The powerplant of any of claims 3 to 5, wherein:
the multi-lobed cavity (48) is a first multi-lobed cavity, and the compressor housing (46) further includes a second multi-lobed cavity; and
the Wankel compressor rotor (44) is a first Wankel compressor rotor, the compressor section (36) further includes a second Wankel compressor rotor disposed in the second multi-lobed cavity, and the second Wankel compressor rotor is configured to rotate eccentrically about the axis (54).

7. The powerplant (20) of any preceding claim, wherein the Wankel compressor rotor (44) is a or the first Wankel compressor rotor, and the compressor section (36) further comprises:
a first Wankel compressor (30A) comprising the first Wankel compressor rotor; and
a second Wankel compressor (30B) comprising a or the second Wankel compressor rotor;
the first Wankel compressor (30A) and the second Wankel compressor (30B) fluidly coupled in parallel between the airflow inlet (40) into the flowpath (34) and the combustor section (37).

8. The powerplant (20) of any of claims 1 to 6, wherein the Wankel compressor rotor (44) is a or the first Wankel compressor rotor, and the compressor section (36) further comprises:
a first Wankel compressor (30A) comprising the first Wankel compressor rotor; and
a second Wankel compressor (30B) comprising a or the second Wankel compressor rotor;
the first Wankel compressor (30A) and the second Wankel compressor (30B) fluidly coupled in series between the airflow inlet (40) into the flowpath (34) and the combustor section (37).

9. The powerplant (20) of any preceding claim, wherein:
the Wankel compressor rotor (44) is configured to eccentrically rotate about a first axis (54) and the turbine rotor (84) is configured to rotate about a second axis (76) offset from the first axis (54); or
the Wankel compressor rotor (44) is configured to eccentrically rotate about an axis (54) and the turbine rotor (84) is configured to rotate about the axis (54).

10. The powerplant (20) of any preceding claim, wherein the compressor section (36) further comprises a second compressor rotor (80,82) arranged between the airflow inlet (40) into the flowpath (34) and the Wankel compressor rotor (44) along the flowpath (34).

11. The powerplant (20) of claim 10, wherein the second compressor rotor (80,82) is operatively coupled to the turbine rotor (84).

12. The powerplant (20) of claim 10 or 11, wherein the second compressor rotor (80,82) comprises:
an axial flow compressor rotor (80); and/or
a radial flow compressor rotor (82).

13. The powerplant (20) of any preceding claim, wherein the turbine rotor (84) comprises an axial flow turbine rotor.

14. The powerplant (20) of any preceding claim, further comprising:
a heat exchanger (120) arranged along the flowpath between the airflow inlet (40) into the flowpath (34) and the Wankel compressor rotor (44); and/or
a heat exchanger (122) arranged along the flowpath (34) between the Wankel compressor rotor (44) and the combustor section (37).

15. The powerplant (20) of any preceding claim, further comprising a mechanical load (22) comprising a driven rotor (26,28), wherein the turbine section (38) further comprises a second turbine rotor (86) arranged between the turbine rotor (84) and the combustion products exhaust (42) from the flowpath (34) along the flowpath (34), and the second turbine rotor (86) operatively coupled to the driven rotor (26,28).
